# EUROPÄISCHE PATENTANMELDUNG

(11) **EP 2 015 014 A1**
(43) Veröffentlichungstag der Anmeldung: **14.01.2009**
(21) Anmeldenummer: 07020541.4
(22) Anmeldetag: 19.10.2007
(51) Int. Cl.: F26B 3/347

(54) **Verfahren zur Trocknung von Schäumen aus wässrigen PUR-Dispersionen**

(30) Priorität: 11.07.2007 EP 07013548; 24.08.2007 EP 07016605
(71) Anmelder: Bayer MaterialScience AG, 51368 Leverkusen (DE)
(72) Erfinder: Niesten, Meike, Dr., 51061 Köln (DE); Hofacker, Steffen, Dr., 51519 Odenthal (DE); Rische, Thorsten, Dr., 59423 Unna (DE); Dörr, Sebastian, Dr., 40597 Düsseldorf (DE); Krämer, Thorsten, 40764 Langenfeld (DE)

(57) **Zusammenfassung**

Die Erfindung betrifft die Trocknung von Schäumen mittels Mikrowellenstrahlung, welche aus wässrigen Polyurethan-Dispersionen (PUR-Dispersionen) erhalten werden.

## Beschreibung

Die Erfindung betrifft die Mikrowellentrocknung von Schäumen, welche bevorzugt aus wässrigen PUR-Dispersionen erhalten werden.

Bei der Beschichtung von Substraten werden zunehmend wässrige Bindemittel, insbesondere Polyurethan-Dispersionen verwendet.

Polyurethan Dispersionen sind aufgrund ihrer exzellenten Verschäumbarkeit und den vorteilhaften Eigenschaften daraus hergestellter Beschichtungen und Schäume wie guter Abriebfestigkeit, Kratz-, Knick- und Hydrolysebeständigkeit für Anwendungen im Bereich Polstermöbel, Arbeitsschutz und Autoinnenausstattung besonders geeignet. So ist es möglich in nur einem Arbeitsgang Schaumauflagen mit vergleichsweise hoher Schichtstärke herzustellen, wie sie ansonsten nur mit lösemittelhaltigen high solids Beschichtungsmittteln möglich sind (DE 10 2004 060 139).

Da Schäume auf Basis wässriger Polyurethan-Dispersionen außerdem weitestgehend frei von organischen Lösemitteln und Isocyanat-Monomeren sind, können sie ohne weitere Vorbehandlung oder Aufreinigung auch für kosmetische und medizinische Anwendungen eingesetzt werden.

Schäume aus wässrigen PUR-Dispersionen werden typischerweise durch Aufschäumen, Auftrag des Schaumes auf einen Träger und anschließende physikalische Trocknung hergestellt. Zur Beschleunigung der Trocknung wird üblicherweise warme Luft verwendet. Diese Technik des Trocknens eignet sich allerdings nur für Schaumstärken von maximal 3 mm bezogen auf die zu trocknende feuchte Schaumlage. Bei Lagen größerer Stärke tritt das Problem auf, dass der Schaum nur noch oberflächlich antrocknet und Feuchtigkeit aus dem Inneren zunehmend schwerer entweichen kann. Dies führt zu einem inhomogenen und zeitlich zum teil stark verzögerten Trocknungsverhalten.

Es bestand daher Bedarf an einem Verfahren zur Trocknung von Schäumen aus wässrigen PUR-Dispersionen, welches auch bei Nass-Schaumstärken von mehr als 3 mm in angemessener Zeit und unter Erhalt der Schaumstruktur zu homogen, d.h., über den gesamten Schaumquerschnitt, getrockneten Schäumen führt.

Die Trocknung wässriger Lacke, insbesondere Lacke auf Basis von wässrigen Polyurethan Dispersionen mittels Mikrowellen-Strahlung ist beispielsweise aus EP-A 880 001, DE-A 4 121 203 oder US 2004/0253452 bekannt. Dabei handelt es sich jedoch stets um Lackfilme mit Schichtdicken von maximal 100 µm, welche üblicherweise blasenfrei, also ohne jegliche Art von Schaumstrukturen sind.

Es wurde nun überraschenderweise gefunden, dass sich Mikrowellenstrahlung auch dazu eignet, Schäume, welche aus wässrigen PUR-Dispersionen hergestellt sind, unter Erhalt ihrer Schaumstruktur zu trocknen, wobei eine gleichmäßige Trocknung des Schaumes über den gesamten Schaumquerschnitt erzielt werden kann.

Gegenstand der Erfindung ist daher ein Verfahren zur Trocknung von wasserfeuchten Schäumen, bevorzugt solchen, die aus wässrigen PUR-Dispersionen und gegebenenfalls weiteren Bestandteilen durch Aufschäumen erhältlich sind, in dem der feuchte Schaum Mikrowellenstrahlung ausgesetzt wird.

Trocknung im Rahmen der vorliegenden Erfindung meint die Senkung des Wassergehaltes an einem zu trocknenden Schaum.

Wasserfeucht im Zusammenhang mit der vorliegenden Erfindungen meint einen Wasseranteil bezogen auf den Gesamtschaum von wenigstens 10 Gew.-%, bevorzugt 15 bis 60 Gew.-%, besonders bevorzugt 35 bis 60 Gew.-%.

Unter Mikrowellenstrahlung im Rahmen der Erfindung wird eine elektromagnetische Strahlung im Wellenlängenbereich von 300 MHz bis 300 GHz verstanden. Bevorzugt sind Strahlungen in den Frequenzbereichen 2,0 bis 3,0 GHz sowie 0,8 bis 1,5 GHz. Besonders bevorzugte Frequenzen betragen 2,2 bis 2,6 sowie 0,85 bis 1,0 GHz. Ganz besonders bevorzugt sind die Frequenzen 2,45 GHz (±0,1 GHz) und 0,915 GHz (±0,05 GHz).

Als wässrige PUR-Dispersionen, welche den zu trocknenden Schäume zugrunde liegen, eignen sich sämtliche dem Fachmann an sich bekannten Dispersionen von Polyurethanen und/oder Polyurethan-Polyharnstoffen in wässrigen Medien.

Bevorzugt sind Polyurethan-Polyharnstoff-Dispersionen.

Bevorzugt weisen die PUR-Dispersionen Feststoffgehalte von 40 bis 63 Gew.-% auf.

Solche PUR-Dispersionen sind bevorzugt erhältlich, in dem
A) isocyanatfunktionelle Prepolymere aus
   a1) aliphatischen oder cycloaliphatischen Polyisocyanaten
   a2) polymeren Polyolen mit zahlenmittleren Molekulargewichten von 400 bis 8000 g/mol und OH-Funktionalitäten von 1,5 bis 6,
   a3) gegebenenfalls hydroxyfunktionellen, ionischen oder potentiell ionischen und/oder nichtionischen Hydrophilierungsmitteln,
   hergestellt werden,
B) deren freie NCO-Gruppen dann ganz oder teilweise mit
   b1) aminofunktionellen Verbindungen mit Molekulargewichten von 32 bis 400 g/mol und/oder
   b2) aminofunktionellen, ionischen oder potentiell ionischen Hydrophilierungsmitteln
   unter Kettenverlängerung umgesetzt werden und die Prepolymere vor während oder nach Schritt B) in Wasser dispergiert werden, wobei gegebenenfalls enthaltene potentiell ionische Gruppen durch teilweise oder vollständige Umsetzung mit einem Neutralisationsmittel in die ionische Form überführt werden können.

Isocyanatreaktive Gruppen sind beispielsweise Amino-, Hydroxy- oder Thiolgruppen.

In a1) werden typischerweise 1,6-Hexamethylendiisocyanat, Isophorondiisocyanat, die isomeren Bis-(4,4'-isocyanatocyclohexyl)methane sowie deren Mischungen eingesetzt.

Ebenso möglich ist die Verwendung modifizierter Diisocyanate mit Uretdion-, Isocyanurat-, Urethan-, Allophanat-, Biuret-, Iminooxadiazindion- und/oder Oxadiazintrionstruktur sowie die von nicht-modifizierten Polyisocyanaten mit mehr als 2 NCO-Gruppen pro Molekül wie 4-Isocyanatomethyl-1,8-octandiisocyanat (Nonantriisocyanat) oder Triphenylmethan-4,4',4"-triisocyanat.

Besonders bevorzugt handelt es sich bei den Verbindungen der Komponente a1) um Polyisocyanate oder Polyisocyanatgemische der vorstehend genannten Art mit ausschließlich aliphatisch und/oder cycloaliphatisch gebundenen Isocyanatgruppen und einer mittleren NCO-Funktionalität der Mischung von 2 bis 4, bevorzugt 2 bis 2,6 und besonders bevorzugt 2 bis 2,4.

Als Komponenten in a2) werden polymere Polyole mit zahlenmittleren Molekulargewichten von 400 bis 6000 g/mol, besonders bevorzugt von 600 bis 3000 g/mol eingesetzt. Diese weisen bevorzugt OH-Funktionalitäten von 1,8 bis 3, besonders bevorzugt von 1,9 bis 2,1 auf.

Bei solchen polymeren Polyolen, die in der Polyurethanlacktechnologie an sich bekannt sind, handelt es sich um Polyesterpolyole, Polycarbonatpolyole, Polyetherpolyole, Polyacrylatpolyole, Polyesterpolycarbonatpolyole und Polyethercarbonatpoylole. Diese können in a2) einzeln oder in beliebigen Mischungen untereinander eingesetzt werden.

Bei den eingesetzten polymeren Polyolen der vorgenannten Art handelt es sich bevorzugt um solche mit aliphatischem Grundgerüst. Bevorzugt werden aliphatische Polycarbonatpolyole, Polyesterpolyole, Polyetherpolyole oder beliebige Mischungen daraus eingesetzt.

Bevorzugte Ausführungsformen der bevorzugt einzusetzenden PUR-Dispersionen enthalten als Komponente a2) eine Mischung aus Polycarbonatpolyolen und Polytetramethylenglykolpolyolen, wobei der Anteil in der Mischung von 35 bis 70 Gew.-% an Polytetramethylenglykolpolyolen und 30 bis 65 Gew.-% an Polycarbonatpolyolen beträgt, mit der Maßgabe, dass die Summe der Gewichtsprozente der Polycarbonat- und Polytetramethylenglykolpolyole 100 Gew.-% ergibt.

Unter hydroxyfunktionellen, ionischen oder potentiell ionischen Hydrophilierungsmitteln a3) werden sämtliche Verbindungen verstanden, die mindestens eine isocyanatreaktive Hydroxylgruppe sowie mindestens eine Funktionalität, wie z.B. -COOY, -SO₃Y, -PO(OY)₂ (Y beispielsweise = H⁺, NH₄⁺, Metallkation), -NR₂, -NR₃⁺ (R = H, Alkyl, Aryl), aufweisen, die bei Wechselwirkung mit wässrigen Medien ein pH-Wert-abhängiges Dissoziationsgleichgewicht eingeht und auf diese Weise negativ, positiv oder neutral geladen sein kann.

Geeignete ionisch oder potentiell ionisch hydrophilierende Verbindungen entsprechend der Definition der Komponente a3) sind z.B. Mono- und Dihydroxycarbonsäuren, Mono- und Dihydroxysulfonsäuren, sowie Mono- und Dihydroxyphosphonsäuren und ihre Salze wie Dimethylolpropionsäure, Dimethylolbuttersäure, Hydroxypivalinsäure, Äpfelsäure, Zitronensäure, Glykolsäure, Milchsäure, das propoxylierte Addukt aus 2-Butendiol und NaHSO₃, z.B. beschrieben in der DE-A 2 446 440 (Seite 5-9, Formel I-III) sowie Verbindungen, die in kationische Gruppen überführbare, z.B. Amin-basierende, Bausteine wie N-Methyl-diethanolamin als hydrophile Aufbaukomponenten enthalten.

Bevorzugte ionische oder potentiell ionische Hydrophilierungsmittel der Komponente a3) sind solche der vorstehend genannten Art, die anionisch, bevorzugt über Carboxy- oder Carboxylat- und/oder Sulfonatgruppen hydrophilierend wirken.

Besonders bevorzugte ionische oder potentiell ionische Hydrophilierungsmittel sind solche, die Carboxyl- und/oder Sulfonatgruppen als anionische oder potentiell anionische Gruppen enthalten, wie die Salze von der Dimethylolpropionsäure oder Dimethylolbuttersäue.

Geeignete nichtionisch hydrophilierende Verbindungen der Komponente a3) sind z.B. Polyoxyalkylenether, die mindestens eine Hydroxygruppe als isocyanatreaktive Gruppe enthalten.

Beispiele sind die monohydroxyfunktionellen, im statistischen Mittel 5 bis 70, bevorzugt 7 bis 55 Ethylenoxideinheiten pro Molekül aufweisenden Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4. Auflage, Band 19, Verlag Chemie, Weinheim S. 31-38).

Diese sind entweder reine Polyethylenoxidether oder gemischte Polyalkylenoxidether, wobei sie mindestens 30 mol-%, bevorzugt mindestens 40 mol-% bezogen auf alle enthaltenen Alkylenoxideinheiten an Ethylenoxideinheiten enthalten.

Besonders bevorzugte nichtionische Verbindungen sind monofunktionelle gemischte Polyalkylenoxidpolyether, die 40 bis 100 mol-% Ethylenoxid- und 0 bis 60 mol-% Propylenoxideinheiten aufweisen.

Geeignete Startermoleküle für solche nichtionischen Hydrophilierungsmittel sind gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole der vorstehend genannten Art. Besonders bevorzugt werden Diethylenglykolmonobutylether oder n-Butanol als Startermoleküle verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Als Komponente b1) können Di- oder Polyamine wie 1,2-Ethylendiamin, 1,2- und 1,3-Diaminopropan, 1,4-Diaminobutan, 1,6-Diaminohexan, Isophorondiamin, Isomerengemisch von 2,2,4- und 2,4,4-Trimethylhexamethylendiamin, 2-Methylpentamethylendiamin, Diethylentriamin, und 4,4-Diaminodicyclohexylmethan und/oder Dimethylethylendiamin eingesetzt werden.

Darüber hinaus können als Komponente b1) auch Verbindungen, die neben einer primären Aminogruppe auch sekundäre Aminogruppen oder neben einer Aminogruppe (primär oder sekundär) auch OH-Gruppen aufweisen, eingesetzt werden. Beispiele hierfür sind primäre/sekundäre Amine, wie Diethanolamin, 3-Amino-1-Methylaminopropan, 3-Amino-1-Ethylaminopropan, 3-Amino-1-cyclohexylaminopropan, 3-Amino-1- Methylaminobutan, Alkanolamine wie N-Aminoethylethanolamin, Ethanolamin, 3-Aminopropanol, Neopentanolamin.

Ferner können als Komponente b1) auch monofunktionelle Aminverbindungen eingesetzt werden, wie beispielsweise Methylamin, Ethylamin, Propylamin, Butylamin, Octylamin, Laurylamin, Stearylamin, Isononyloxypropylamin, Dimethylamin, Diethylamin, Dipropylamin, Dibutylamin, N-Methylaminopropylamin, Diethyl(methyl)aminopropylamin, Morpholin, Piperidin, bzw. geeignete substituierte Derivate davon, Amidamine aus diprimären Aminen und Monocarbonsäuren, Monoketime von diprimären Aminen, primär/tertiäre Amine, wie N,N-Dimethylaminopropylamin.

Bevorzugt werden 1,2-Ethylendiamin, 1,4-Diaminobutan, Isophorondiamin und Diethylentriamin eingesetzt.

Unter ionisch bzw. potentiell ionisch hydrophilierenden Verbindungen der Komponente b2) werden sämtliche Verbindungen verstanden, die mindestens eine isocyanatreaktive Amino-Gruppe sowie mindestens eine Funktionalität, wie z.B. -COOY, -SO₃Y, -PO(OY)₂ (Y beispielsweise = H⁺, NH₄⁺, Metallkation) aufweisen, die bei Wechselwirkung mit wässrigen Medien ein pH-Wert-abhängiges Dissoziationsgleichgewicht eingeht und auf diese Weise positiv, negativ oder neutral geladen sein kann.

Geeignete ionisch oder potentiell ionisch hydrophilierende Verbindungen sind zum Beispiel Mono- und Diaminocarbonsäuren, Mono- und Diaminosulfonsäuren sowie Mono- und Diaminophosphonsäuren und ihre Salze. Beispiele solcher ionischen bzw. potentiell ionischen Hydrophilierungsmittel sind N-(2-Aminoethyl)-β-alanin, 2-(2-Amino-ethylamino)-ethansulfonsäure, Ethylendiamin-propyl- oder -butylsulfonsäure, 1,2- oder 1,3-Propylendiamin-β-ethylsulfonsäure, Glycin, Alanin, Taurin, Lysin, 3,5-Diaminobenzoesäure und das Additionsprodukt von IPDI und Acrylsäure (EP-A 0 916 647, Beispiel 1). Weiterhin kann Cyclohexylaminopropansulfonsäure (CAPS) aus WO-A 01/88006 als anionisches oder potentiell anionisches Hydrophilierungsmittel verwendet werden.

Bevorzugte ionische oder potentiell ionische Hydrophilierungsmittel b2) sind solche, die Carboxyl- und/oder Sulfonatgruppen als anionische oder potentiell anionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1).

Zur Hydrophilierung wird bevorzugt eine Mischung aus anionischen bzw. potentiell anionischen Hydrophilierungsmitteln und nichtionischen Hydrophilierungsmitteln verwendet.

Das Verhältnis von NCO-Gruppen der Verbindungen aus Komponente a1) zu NCO-reaktiven Gruppen der Komponenten a2) bis a3) beträgt bei der Herstellung des NCO-funktionellen Prepolymers 1,2 bis 3,0, bevorzugt 1,3 bis 2,5.

Die aminofunktionellen Verbindungen in Stufe B) werden in solch einer Menge eingesetzt, dass das Äquivalentverhältnis von isocyanatreaktiven Aminogruppen dieser Verbindungen zu den freien Isocyanatgruppen des Prepolymers 50 bis 125 %, bevorzugt zwischen 60 bis 120 % beträgt.

In einer bevorzugten Ausführungsform werden anionisch und nichtionisch hydrophilierte Polyurethandispersionen eingesetzt, wobei zu deren Herstellung die Komponenten a1) bis a3) und b1) bis b2) in den folgenden Mengen eingesetzt werden, wobei sich die Einzelmengen zu 100 Gew.-% aufaddieren:
10 bis 30 Gew.-% Komponente a1),
65 bis 85 Gew.-% a2),
0,5 bis 14 Gew.-% Summe der Komponente b1)
0,1 bis 13,5 Gew.-% Summe der Komponenten a3) und b2), wobei bezogen auf die Gesamtmengen der Komponenten a1) bis a3) 0,5 bis 3,0 Gew.-% an anionischen oder potentiell anionischen Hydrophilierungsmitteln verwendet werden.

Besonders bevorzugte Ausführungsformen der Polyurethan Dispersionen (I) enthalten als Komponente a1) Isophorondiisocyanat und/oder 1,6-Hexamethylendiisocyanat und/oder die isomeren Bis-(4,4'-isocyanatocyclohexyl)methane in Kombination mit a2) einer Mischung aus Polycarbonatpolyolen und Polytetramethylenglykolpolyolen.

Die Herstellung solcher Polyurethandispersionen kann in einer oder mehreren Stufe/-n in homogener oder bei mehrstufiger Umsetzung, teilweise in disperser Phase durchgeführt werden. Nach vollständig oder teilweise durchgeführter Polyaddition aus a1) bis a3) erfolgt ein Dispergier-, E-mulgier- oder Lösungsschritt. Im Anschluss erfolgt gegebenenfalls eine weitere Polyaddition oder Modifikation in disperser Phase.

Dabei können alle aus dem Stand der Technik bekannten Verfahren wie z. B. Prepolymer-Mischverfahren, Acetonverfahren oder Schmelzdispergierverfahren verwendet werden. Bevorzugt wird nach dem Aceton-Verfahren verfahren.

Für die Herstellung nach dem Aceton-Verfahren werden üblicherweise die Bestandteile a2) bis a3), die keine primären oder sekundären Aminogruppen aufweisen dürfen und die Polyisocyanatkomponente a1) zur Herstellung eines isocyanatfunktionellen Polyurethan-Prepolymers ganz oder teilweise vorgelegt und gegebenenfalls mit einem mit Wasser mischbaren aber gegenüber Isocyanatgruppen inerten Lösungsmittel verdünnt und auf Temperaturen im Bereich von 50 bis 120°C aufgeheizt. Zur Beschleunigung der Isocyanatadditionsreaktion können die in der Polyurethan-Chemie bekannten Katalysatoren eingesetzt werden.

Geeignete Lösungsmittel sind die üblichen aliphatischen, ketofunktionellen Lösemittel wie Aceton, 2-Butanon, die nicht nur zu Beginn der Herstellung, sondern gegebenenfalls in Teilen auch später zugegeben werden können. Bevorzugt sind Aceton und 2-Butanon.

Anschließend werden die gegebenenfalls zu Beginn der Reaktion noch nicht zugegebenen Bestandteile von a1) bis a3) zudosiert.

Die Umsetzung der Komponenten a1) bis a3) zum Prepolymer erfolgt teilweise oder vollständig, bevorzugt aber vollständig. Es werden so Polyurethan-Prepolymere, die freie Isocyanatgruppen enthalten, in Substanz oder in Lösung erhalten.

Im Anschluss wird in einem weiteren Verfahrensschritt, falls noch nicht oder nur teilweise geschehen das erhaltene Prepolymer mit Hilfe von aliphatischen Ketonen wie Aceton oder 2-Butanon gelöst.

Die aminischen Komponenten b1), b2), können gegebenenfalls in wasser- oder lösemittelverdünnter Form im erfindungsgemäßen Verfahren einzeln oder in Mischungen eingesetzt werden, wobei grundsätzlich jede Reihenfolge der Zugabe möglich ist.

Wenn Wasser oder organische Lösemittel als Verdünnungsmittel mitverwendet werden, so beträgt der Verdünnungsmittelgehalt in der in B) eingesetzten Komponente zur Kettenverlängerung bevorzugt 30 bis 95 Gew.-%.

Die Dispergierung erfolgt bevorzugt im Anschluss an die Kettenverlängerung. Dazu wird das gelöste und kettenverlängerte Polyurethanpolymer gegebenenfalls unter starker Scherung, wie z.B. starkem Rühren, entweder in das Dispergierwasser eingetragen oder es wird umgekehrt das Dispergierwasser zu den kettenverlängerte Polyurethanpolymerlösungen gerührt. Bevorzugt wird das Wasser in das gelöste kettenverlängerte Polyurethanpolymer gegeben.

Das in den Dispersionen nach dem Dispergierschritt noch enthaltene Lösemittel wird üblicherweise anschließend destillativ entfernt. Eine Entfernung bereits während der Dispergierung ist ebenfalls möglich.

Der Restgehalt an organischen Lösemitteln in den erfindungswesentlichen Dispersionen beträgt typischerweise weniger als 1,0 Gew.-%, bevorzugt weniger als 0,3 Gew.-% bezogen auf die gesamte Dispersion.

Der pH-Wert der erfindungswesentlichen Dispersionen beträgt typischerweise weniger als 9,0, bevorzugt weniger als 8,0.

Bei der Herstellung der zu trocknenden Schäume können neben den PUR-Dispersionen auch Schaumhilfsmittel (II), Verdicker (III) und sonstige Hilfs- und Zusatzstoffe (IV) mitverwendet werden.

Als Schaumhilfsmittel (II) sind handelsübliche Stabilisatoren geeignet, wie wasserlösliche Fettsäureamide, Sulfosuccinamide, Kohlenwasserstoffsulfonate, -sulfate oder Fettsäuresalze, wobei der lipophile Rest bevorzugt 12 bis 24 Kohlenstoffatome enthält, Alkylpolyglycoside etc.

Bevorzugte Schaumhilfsmittel (II) sind Alkansulfonate oder -sulfate mit 12 bis 22 Kohlenstoffatomen im Kohlenwasserstoffrest, Alkylbenzosulfonate oder -sulfate mit 14 bis 24 Kohlenstoffatomen im Kohlenwasserstoffrest oder Fettsäureamide oder Fettsäuresalze mit 12 bis 24 Kohlenstoffatomen.

Bei vorgenannten Fettsäureamiden handelt es sich vorzugsweise um Fettsäureamide von Mono- oder Di-(C2-3-alkanol)-aminen. Fettsäuresalze können beispielsweise Alkalimetallsalze, Aminsalze oder unsubstituierte Ammoniumsalze sein.

Solche Fettsäurederivate basieren typischerweise auf Fettsäuren wie Laurinsäure, Myristinsäure, Palmitinsäure, Ölsäure, Stearinsäure, Ricinolsäure, Behensäure oder Arachidinsäure, Kokosfettsäure, Talgfettsäure, Sojafettsäure und deren Hydrierungsprodukten.

Besonders bevorzugte Schaumhilfsmittel (II) sind Natriumlaurylsulfat, Sulfosuccinamide und Ammoniumstearate, sowie Mischungen daraus.

Verdicker (III) im Sinne der Erfindung sind Verbindungen, die es ermöglichen, die Viskosität der resultierenden Mischung aus I-IV so einzustellen, dass die Erzeugung und Verarbeitung des erfindungsgemäßen Schaumes begünstigt. Als Verdicker sind handelsübliche Verdicker geeignet, wie beispielsweise natürliche organische Verdicker, z.B. Dextrine oder Stärke, organisch abgewandelte Naturstoffe, z.B. Celluloseether oder Hydroxy-ethylcellulose, organisch vollsynthetische, z.B. Polyacrylsäuren, Polyvinylpyrrolidone, Poly(meth)acrylverbindungen oder Polyurethane (assoziative Verdicker) sowie anorganische Verdicker, z.B. Betonite oder Kieselsäuren. Bevorzugt werden organisch vollsynthetische Verdicker eingesetzt. Besonders bevorzugt werden Acrylatverdicker verwendet, die vor der Zugabe gegebenenfalls weiter mit Wasser verdünnt werden. Bevorzugte handelsübliche Verdicker sind beispielsweise Mirox^{®} AM (BGB Stockhausen GmbH, Krefeld, Deutschland), Walocel^{®} MT 6000 PV (Wolff Cellulosics GmbH & Co KG, Walsrode, Deutschland), Rheolate^{®} 255 (Elementies Specialities, Gent, Belgien), Collacral^{®} VL (BASF AG, Ludwigshafen, Deutschland), Aristoflex^{®} AVL (Clariant, Sulzbach, Deutschland)

Ggf. in Komponente (IV) enthaltene Hilfs- und Zusatzstoffe können z. B. oberflächenaktive Substanzen, Schleifwachse, interne Trennmittel, Füllstoffe, Farbstoffe, Pigmente, Flammschutzmittel, Hydrolyseschutzmittel, Mikrobizide, Verlaufshilfsmittel, Antioxidantien wie 2,6-Di-tert-butyl-4-methylphenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin^{®} 292 und Tinuvin^{®} 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, oder beliebige Gemische dieser Verbindungen.

Üblicherweise werden bei der Schaumherstellung 80 bis 99,5 Gew.-% der PUR-Dispersion, 0 bis 10 Gew.-% der Komponente (II), 0 bis 10 Gew.-% der Komponente (III) eingesetzt, wobei die Mengenangaben auf die entsprechenden wasserfreien Komponenten (I) bis (III) bezogen sind und sich die Summe der wasserfreien Einzelkomponenten zu 100 Gew.-% addiert.

Bevorzugt werden bei der Schaumherstellung 80 bis 99,5 Gew.-% der PUR-Dispersion, 0,1 bis 10 Gew.-% der Komponente (II) und 0,1 bis 10 Gew.-% der Komponente (III) eingesetzt, wobei die Mengenangaben auf die entsprechenden wasserfreien Komponenten (I) bis (III) bezogen sind und sich die Summe der wasserfreien Einzelkomponenten zu 100 Gew.-% addiert.

Die Schaumherstellung kann durch Eintrag von Luft und/oder unter Einwirkung entsprechender Scherenergie (z.B. mechanisches Rühren) oder durch handelsübliche Treibmittel erfolgen. Bevorzugt wird der Eintrag von Luft unter Einwirkung entsprechender Scherenenergie.

Die geschäumte Zusammensetzung kann auf verschiedenste Arten und Weisen auf verschiedenste Oberflächen oder in Formen appliziert werden wie z.B. Gießen, Rakeln, Walzen, Streichen, Spritzen oder Sprühen; ebenso ist eine Formgebung durch ein Extrusionsverfahren möglich.

Während das geschäumte Material vor Trocknung eine bevorzugte Schaumdichte von 200 bis 900 g/1, insbesondere bevorzugt 250 bis 600 g/l aufweist, beträgt die Dichte der resultierenden Schäume nach der Trocknung vorzugsweise 50 bis 700 g/1, besonders bevorzugt 200 bis 550 g/1.

Die eigentliche Trocknung erfolgt durch Einwirkung von Mikrowellenstrahlung im Rahmen der vorstehend genannten Frequenzbereiche.

Die bei vorgenannten Frequenzen eingebrachte Leistung beträgt bevorzugt 250 bis 6000 W, besonders bevorzugt 500 bis 4000 W pro Kilogramm zu trocknenden Schaums.

Ferner ist es möglich neben der Nutzung von Mikrowellenstrahlung, auch eine Kombination aus Mikrowellenstrahlung und konventioneller thermischer Trocknung, durch Erwärmen des zu trocknenden Schaums mittels IR-Strahlung und/oder Heissluft anzuwenden. Dabei ist es unwesentlich, ob die beiden Trocknungsarten parallel zueinander oder nacheinander eingesetzt werden. Im Falle nacheinander abfolgender Trocknung mittels Mikrowellenstrahlung und thermischer Behandlung ist es bevorzugt, zuerste eine Trocknung mittels Mikrowellenstrahlung durchzuführen und anschließend die thermische Behandlung durchzuführen.

Durch das erfindungsgemäße Verfahren ist es möglich Schäume bis zu einer Höhe von 50 mm homogen zu trocknen, wobei der Begriff Höhe bezogen ist auf diejenige Raumrichtung, in der der Schaum die geringste Ausdehnung hat.

In einer bevorzugten Ausführungsform des Verfahrens werden flächige Schäume, wie sie mittels Gießverfahren hergestellt werden können, mit einer Höhe von bis zu 20 mm getrocknet.

Ebenfalls bevorzugt ist die Trocknung von Schaumsträngen, wie sie bevorzugt bei der Extrusion erhalten werden, mit einer Höhe und Breite des Stranges von jeweils 1 bis 30 mm, bevorzugt einer Höhe von 5 bis 30 mm und einer Breite von 1 bis 30 mm.

Ferner ist die Trocknung von Schäumen, wie sie mittels Formengießverfahren erhalten werden können bevorzugt, wobei die Schäume jeweils bezogen auf Höhe Breite und Länge eine Ausdehnung von 1 bis 30 mm haben.

Die erfindungsgemäßen Schäume können auch in mehreren Schichten beispielsweise zur Erzeugung besonders hoher Schaumauflagen, auf die verschiedensten Substrate aufgetragen werden oder in Formen gegossen werden.

Darüber hinaus können die erfindungsgemäßen geschäumten Zusammensetzungen auch in Kombination mit anderen Trägermaterialien wie z.B. textile Träger, Papier etc. eingesetzt werden, beispielsweise durch vorheriges Auftragen (z.B. Beschichten).

Beste Trocknungsergebnisse werden erzielt, wenn Schäume mit einer Höhe von 1 bis 30 mm, bevorzugt 1 bis 18 mm, wie Sie mittels Rakeln, Giessen oder Extrusion hergestellt werden können zur Trocknung eingesetzt werden.

Das erfindungsgemäße Verfahren ermöglicht eine Reihe von neuen Applikationsformen wie Giessformgebung, Extrusion, gegebenenfalls mit anschließendem Schneiden. Besonders gute Schäumen erhält man außerdem, indem der ungetrocknete Schaum in einem Puderform, z.B. Stärke oder Kieselsäure, gegossen werden und anschließend in der Mikrowelle getrocknet werden.

Zur Erzeugung höherer Schaumdicken können diese auch in mehreren Schichten auf die verschiedensten Substrate aufgetragen werden oder in Formen gegossen werden.

### Beispiele:

Sofern nicht abweichend gekennzeichnet, beziehen sich alle Prozentangaben auf das Gewicht.

Die Bestimmung der Festkörpergehalte erfolgte nach DIN-EN ISO 3251.

NCO-Gehalte wurden, wenn nicht ausdrücklich anders erwähnt, volumetrisch gemäß DIN-EN ISO 11909 bestimmt.

### Verwendete Substanzen und Abkürzungen:

- Diaminosulfonat:: NH₂-CH₂CH₂-NH-CH₂CH₂-SO₃Na (45 %ig in Wasser)
- Desmophen^{®} C2200:: Polycarbonatpolyol, OH-Zahl 56 mg KOH/g, zahlenmittleres Molekulargewicht 2000 g/mol (Bayer MaterialScience AG, Leverkusen, DE)
- PolyTHF^{®} 2000:: Polytetramethylenglykolpolyol, OH-Zahl 56 mg KOH/g, zahlenmittleres Molekulargewicht 2000 g/mol (BASF AG, Ludwigshafen, DE)
- PolyTHF^{®} 1000:: Polytetramethylenglykolpolyol, OH-Zahl 112 mg KOH/g, zahlenmittleres zahlenmittleres Molekulargewicht 1000 g/mol (BASF AG, Ludwigshafen, DE)
- Polyether LB 25:: (monofunktioneller Polyether auf Ethylenoxid-/Propylenoxidbasis zahlenmittleres Molekulargewicht 2250 g/mol, OH-Zahl 25 mg KOH/g (Bayer MaterialScience AG, Leverkusen, DE)
- Stokal^{®} STA:: 30% Ammoniumstearate in Wasser, Schaumstabilisator (Bozzetto GmbH, Krefeld, DE)
- Aristoflex AVL:: Dispersion of a polymeric sulfonic acid and emulsifiers in caprylic/capric acid triglyceride (Clariant, Muttenz, Switzerland)
- Loxanol K12P:: Natriumlaurylsulat (Cognis, Düsseldorf, DE)

Die Bestimmung der mittleren Teilchengrößen (angegeben ist das Zahlenmittel) der PUR-Dispersionen erfolgte mittels Laserkorrelations-Spektroskopie (Gerät: Malvern Zetasizer 1000, Malver Inst. Limited).

### Beispiel 1: PUR-Dispersion (KomponenteI)

761,3 g Desmophen^{®} C2200, 987,0 g PolyTHF^{®} 2000, 375,4g PolyTHF^{®} 1000 und 53,2 g Polyether LB 25 wurden auf 70°C aufgeheizt. Anschließend wurde bei 70°C innerhalb von 5 min ein Gemisch aus 237,0 g Hexamethylendiisocyanat und 313,2 g Isophorondiisocyanat zugegeben und solange unter Rückfluss gerührt bis der theoretische NCO-Wert erreicht war. Das fertige Prepolymer wurde mit 4850 g Aceton bei 50°C gelöst und anschließend eine Lösung aus 1,8 g 25,1 g Ethylendiamin, 61,7 g Diaminosulfonat, 116,5 g Isophorondiamin und 1030 g Wasser innerhalb von 10 min zudosiert. Die Nachrührzeit betrug 10 min. Danach wurde durch Zugabe von 1061 g Wasser dispergiert. Es folgte die Entfernung des Lösemittels durch Destillation im Vakuum und es wurde eine lagerstabile Dispersion mit einem Festkörpergehalt von 60% erhalten.

### Beispiel 2 bis 7: Herstellung der erfindungsgemäßen Schäume

10000 g der aus Beispiel 1 erhaltenen Dispersion (I) wurden mit 90 g Loxanol K12P (II), 150 g Stokal STA (II), 150 g Aristoflex AVL (III) gemischt und anschließend durch Eintragen von Luft mit Hilfe eines Hansamixer Top-Mix-K ((Hansa Industrie Mixer GmbH, Heiligenrode, DE) aufgeschäumt. Die erhaltene Schaumdichte betrug 500 g/l. Der Schaum wurde in 15 cm breiten Schichten von 3, 5, 8, 10, 13 und 15 mm auf ein Trennpapier (VEZ Mat, Sappi, Brüssel, Belgien) aufgezogen. Abschließend wurden die so hergestellten Schäume in einer Versuchsmikrowellenanlage MWT k/1,2-3 LK reg. der Firma EL-A Verfahrenstechnologie (Heidelberg, DE) auf ein poröses Gewebe (Sefar Propyltex 05-1000/45mm Maschenweite, Sefar GmbH, Wasserburg, Deutschland) 5 cm oberhalb des Mikrowellenbodens gelegt und für 30 min bei 30 %iger Leistung (3,6 kW bei maximaler Leistung) getrocknet.

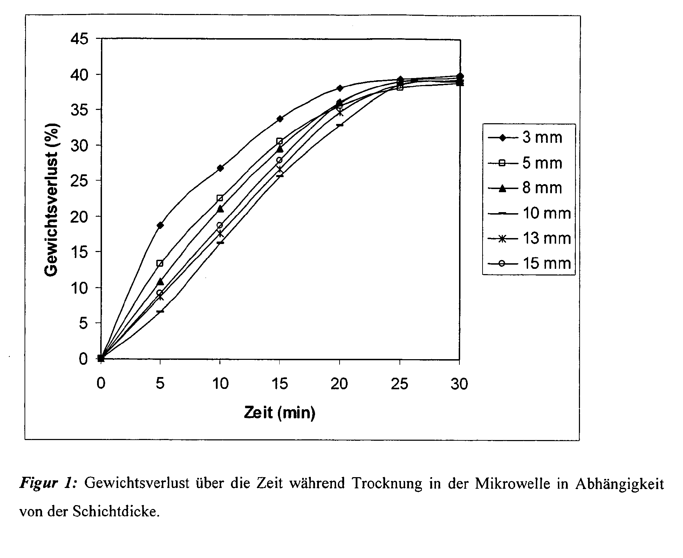

Figur 1 zeigt, dass unabhängig von der Schichtdicke nach 30 min Gewichtskonstanz der zu trocknenden Schäume zu beobachten war. Der dabei eingetretene Gewichtsverlust gegenüber dem feuchten Schaummaterial entsprach dem aufgrund des enthaltenen Wassers zu erwartenden Wert.

### Beispiel 8 bis 13: Vergleichsbeispiele

10000 g der aus Beispiel 1 erhaltenen Dispersion (I) wurden mit 90 g Loxanol K12P (II), 150 g Stokal STA (III), 150 g Aristoflex AVL (IV) gemischt und anschließend durch Eintragen von Luft mit Hilfe eines Hansamixer Top-Mix-K ((Hansa Industrie Mixer GmbH, Heiligenrode, DE) aufgeschäumt. Die erhaltene Schaumdichte betrug 500 g/l. Der Schaum wurde in 15 cm breiten Schichten von 3, 5, 8, 10, 13 und 15 mm auf ein Trennpapier (VEZ Mat, Sappi, Brüssel, Belgien) aufgezogen. Anschließend wurde das Material in einem Umluftofen mit einem Temperaturprofil von 60 °C (30 min), 90 °C (30 min) und 110°C (15 min) getrocknet.

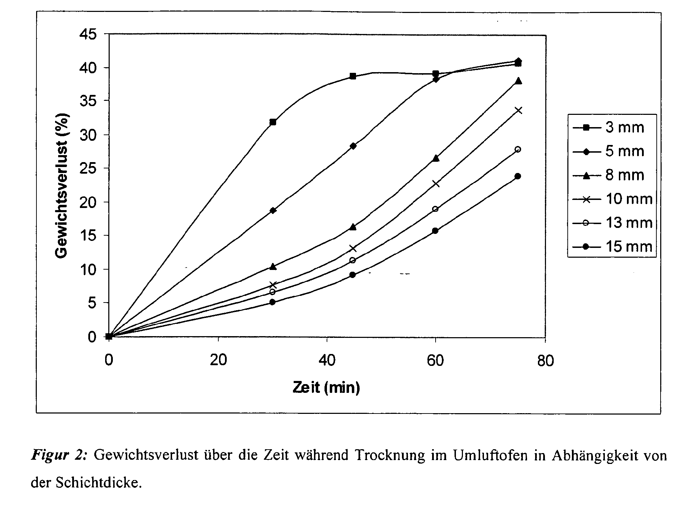

Wie aus Figur 2 zu erkennen ist, konnte nach 75 min nur bei einer Schichtdicke von 3 mm überhaupt ein getrocknetes Material erhalten werden. Bei allen übrigen war nach 75 min noch keine Gewichtskonstanz bzw. das aufgrund des Wassergehalts zu erwartende Endgewicht des Trockenschaums erreicht worden. Unabhängig vom Trocknungsgrad besaßen alle Schäume eine unregelmäßige Schaumstruktur (wie z.B. Hohlräume und Blasen).

### Beispiel 14: Erfindungsgemäßes Beispiel (Extrusion)

10000 g der aus Beispiel 1 erhaltenen Dispersion (I) wurden mit 90 g Loxanol K12P (III), 150 g Stokal STA (III), 150 g Aristoflex AVL (IV) gemischt und anschließend durch Eintragen von Luft mit Hilfe eines Hansamixer Top-Mix-K ((Hansa Industrie Mixer GmbH, Heiligenrode, DE) aufgeschäumt. Die erhaltene Schaumdichte betrug 500 g/l. Danach wurde 470 Gramm der geschäumten Paste durch einen Schlauch mit einem Durchmesser von 15 mm in Streifen auf Trennpapier (VEZ, Mat, Sappi, Brüssel, Belgien) aufgebracht und in einer Versuchsmikrowellenanlage MWT k/1,2-3 LK reg. der Firmal EL-A Verfahrenstechnologie (Heidelberg, DE) auf ein poröses Gewebe (Sefar Propyltex 05-1000/45mm Maschenweite, Sefar GmbH, Wasserburg, Deutschland) 5 cm oberhalb des Mikrowellenbodens gelegt und bei 30% Leistung (3,6 kW beim maximaler Leistung) für 30 Minuten getrocknet.

Dabei wurde ein Gewichtsverlust von 188 g (40 Gew.%) entsprechend der im Schaum ursprünglich enthaltenen Wassermenge gemessen. Der Schaum hatte eine feine gleichmäßige Struktur.

## Patentansprüche

1. Verfahren zur Trocknung von Schäumen, in dem der wasserfeuchte Schaum Mikrowellenstrahlung ausgesetzt wird.

2. Verfahren gemäß Anspruch 1, **dadurch gekennzeichnet, dass** der zu trocknende wasserfeuchte Schaum einen Wassergehalt von 15 bis 60 Gew.-% aufweist.

3. Verfahren gemäß Anspruch 1 oder 2, **dadurch gekennzeichnet**, als Mikrowellenstrahlung elektromagnetische Strahlung mit einer Frequenz im Bereich von 2,0 bis 3,0 GHz oder 0,8 bis 1,5 GHz verwendet wird.

4. Verfahren gemäß einem der Ansprüche 1 bis 3, **dadurch gekennzeichnet, dass** parallel, vor oder nach der Trocknung mittels Mikrowellenstrahlung zusätzlich eine thermische Trocknung erfolgt.

5. Verfahren gemäß einem der Ansprüche 1 bis 4, **dadurch gekennzeichnet, dass** der zu trocknende wasserfeuchte Schaum aus wässrigen PUR-Dispersionen und gegebenenfalls weiteren Bestandteilen durch Aufschäumen erhältlich ist.

6. Verfahren gemäß Anspruch 5, **dadurch gekennzeichnet, dass** es sich bei den PUR-Dispersionen um Polyurethan- oder Polyurethan-Polyharnstoff-Dispersionen mit Festgehalten von 40 bis 63 Gew.-% handelt.

7. Verfahren gemäß Anspruch 5 oder 6, **dadurch gekennzeichnet, dass** diese PUR-Dispersionen erhältlich sind, in dem
A) isocyanatfunktionelle Prepolymere aus
a1) aliphatischen oder cycloaliphatischen Polyisocyanaten
a2) polymeren Polyolen mit zahlenmittleren Molekulargewichten von 400 bis 8000 g/mol und OH-Funktionalitäten von 1,5 bis 6,
a3) gegebenenfalls hydroxyfunktionellen, ionischen oder potentiell ionischen und/oder nichtionischen Hydrophilierungsmitteln,
hergestellt werden,
B) deren freie NCO-Gruppen dann ganz oder teilweise mit
b1) aminofunktionellen Verbindungen mit Molekulargewichten von 32 bis 400 g/mol und/oder
b2) aminofunktionellen, ionischen oder potentiell ionischen Hydrophilierungsmitteln
unter Kettenverlängerung umgesetzt werden und die Prepolymere vor während oder nach Schritt B) in Wasser dispergiert werden, wobei gegebenenfalls enthaltene potentiell ionische Gruppen durch teilweise oder vollständige Umsetzung mit einem Neutralisationsmittel in die ionische Form überführt werden können.

8. Verfahren gemäß Anspruch 7, **dadurch gekennzeichnet, dass** bei der Herstellung der PUR-Dispersionen als Komponente a1) Isophorondiisocyanat und/oder 1,6-Hexamethylendiisocyanat und/oder die isomeren Bis-(4,4'-isocyanatocyclohexyl)methane in Kombination mit a2) einer Mischung aus Polycarbonatpolyolen und Polytetramethylenglykolpolyolen eingesetzt werden.

9. Verfahren gemäß einem der Ansprüche 1 bis 8, **dadurch gekennzeichnet, dass** die wasserfeuchten Schäume vor Trocknung eine Schaumdichte von 250 bis 600 g/l und nach der Trocknung eine Schaumdichte von 200 bis 550 g/l haben.

10. Verfahren gemäß einem der Ansprüche 1 bis 8, **dadurch gekennzeichnet, dass** es sich bei den wasserfeuchten Schäumen um flächige Schäume mit einer Höhe von maximal 20 mm, um strangförmige Schäume mit einer Höhe von 5 bis 30 mm und einer Breite von 1 bis 30 mm oder um Formköper mit einer Ausdehnung jeweils bezogen auf Länge, Breite und Höhe von 1 bis 30 mm handelt.
